# EUROPÄISCHE PATENTANMELDUNG

(11) **EP 2 338 626 A1**
(43) Veröffentlichungstag der Anmeldung: **29.06.2011**
(21) Anmeldenummer: 10196690.1
(22) Anmeldetag: 23.12.2010
(51) Int. Cl.: B23D 57/00, B28D 1/08, F16H 19/00, B28D 1/04

(54) **Seilsäge**

(30) Priorität: 23.12.2009 DE 202009014912 U
(71) Anmelder: EDT Eurodima GmbH, 5071 Wals bei Salzburg (AT)
(72) Erfinder: Winkler, Wolfgang, 5424 Bad Vigaun (AT); Bernhofer, Peter, 5301 Eugendorf (AT)
(74) Vertreter: Ernicke, Klaus Stefan

(57) **Zusammenfassung**

Die Erfindung betrifft eine Seilsäge und einen Vorschubantrieb. Eine Seilsäge (1) weist einen veränderlichen Seilspeicher (10) für ein Sägeseil (3) auf, wobei der Seilspeicher (10) relativ zu einander bewegliche Speicherelemente (12,13) und eine Stelleinrichtung (16) mit einem Vorschubantrieb (21) für die Verstellung der Speicherelemente (12,13) aufweist. Der Vorschubantrieb (21) weist ein lineares Antriebselement (22) auf, das mit dem beweglichen Speicherelement (13) über eine Übertragungseinrichtung (23) mit einer Übersetzung verbunden ist. Der Vorschubantrieb (21) kann zum Vorschub und zur Rückholung eines beweglichen Speicherelements (13) ausgebildet sein.

## Beschreibung

Die Erfindung betrifft eine Seilsäge mit den Merkmalen im Oberbegriff des Hauptanspruchs.

Eine solche Seilsäge ist aus der EP 1 135 231 B1 bekannt. Sie weist einen veränderlichen Seilspeicher für ein umlaufend angetriebenes Sägeseil auf, der relativ zueinander bewegliche Speicherelemente besitzt. Der Seilspeicher weist eine Stelleinrichtung mit einem Vorschubantrieb zur Verstellung des Speichervolumens auf. Der Vorschub- oder sog. Speicherantrieb ist als kolbenstangenloser Pneumatikzylinder ausgebildet.

Es ist Aufgabe der vorliegenden Erfindung, eine weiter verbesserte Seilsäge aufzuzeigen.

Die Erfindung löst diese Aufgabe mit den Merkmalen im Hauptanspruch.
Der beanspruchte Vorschubantrieb für die bevorzugt lineare Bewegung des oder der beweglichen Speicherelemente mit der Übersetzung hat den Vorteil, dass das Antriebselement, vorzugsweise ein pneumatischer oder hydraulischer Zylinder, klein bauen und eine relativ geringe Ausfahrlänge haben kann, wobei das bewegliche Speicherelement eine entsprechend der Übersetzung vergrößerte Vorschubbewegung ausführen kann. Eine Übersetzung ist auch hinsichtlich der Kräfte günstig. Die Übertragungseinrichtung, die bevorzugt als Getriebe, insbesondere als Riemen- oder Seilgetriebe ausgebildet ist, kann außerdem das Antriebselement von etwaigen Stößen oder Schwingungen, die über das Sägeseil eingeleitet werden, entkoppeln und schützen. Hierbei kann auch eine Dämpf- und Federwirkung bestehen.

Der Vorschubantrieb kann einseitig zur Vergrößerung des Seilspeichers und zur Aufnahme des freien Seilüberschusses im Schneidbetrieb sorgen. Er kann auch beidseitig wirksam sein und eine Rückholung des beweglichen Speicherelements ermöglichen. Der verstellbare Seilspeicher mit mehreren Seilsträngen kann in der Art eines Flaschenzugs verkleinert oder vergrößert werden.

Die beanspruchte Ausbildung des Vorschubantriebs hat den Vorteil, dass als lineares Antriebselement ein konventioneller Zylinder eingesetzt werden kann, was Vorteile hinsichtlich der Kosten, des Bauaufwands und der Abdichtung gegen Sägestaub und andere Umwelteinflüsse mit sich bringt. Dank der Übersetzung kann die Auszuglänge des Zylinders begrenzt sein und im Innenraum des Gestells der Seilsäge Platz finden. Im Sägebetrieb treten dadurch keine Antriebsteile nach außen. Insbesondere bewegt sich die Kolbenstange in dem ggf. durch ein Gehäuse geschützten Innenraum des Gestells und ragt nicht nach außen. Etwaige Unfallgefahren durch vorstehende Maschinenteile während des Sägebetriebs können dadurch vermieden werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
Figur 1 und 2: eine Seilsäge mit einem veränderlichen Seilspeicher in unterschiedlichen Speicherstellungen und entsprechenden Sägefortschritten,
Figur 3: eine perspektivische Ansicht der Seilsäge von Figur 1 von der Rückseite her,
Figur 4: eine perspektivische Ansicht einer Stelleinrichtung mit einem Vorschubantrieb zur Veränderung des Seilspeichers in montierter Stellung und in perspektivischer Ansicht,
Figur 5: eine Explosionsdarstellung der Teile des Vorschubantriebs von Figur 4,
Figur 6: eine Draufsicht auf die Stelleinrichtung und den Vorschubantrieb,
Figur 7: eine geklappte Seitenansicht der Anordnung von Figur 6,
Figur 8: eine Stirnansicht der Anordnung von Figur 6 gemäß Pfeil VIII von Figur 6 und
Figur 9: eine abgebrochene und vergrößerte Darstellung des Vorschubantriebs.

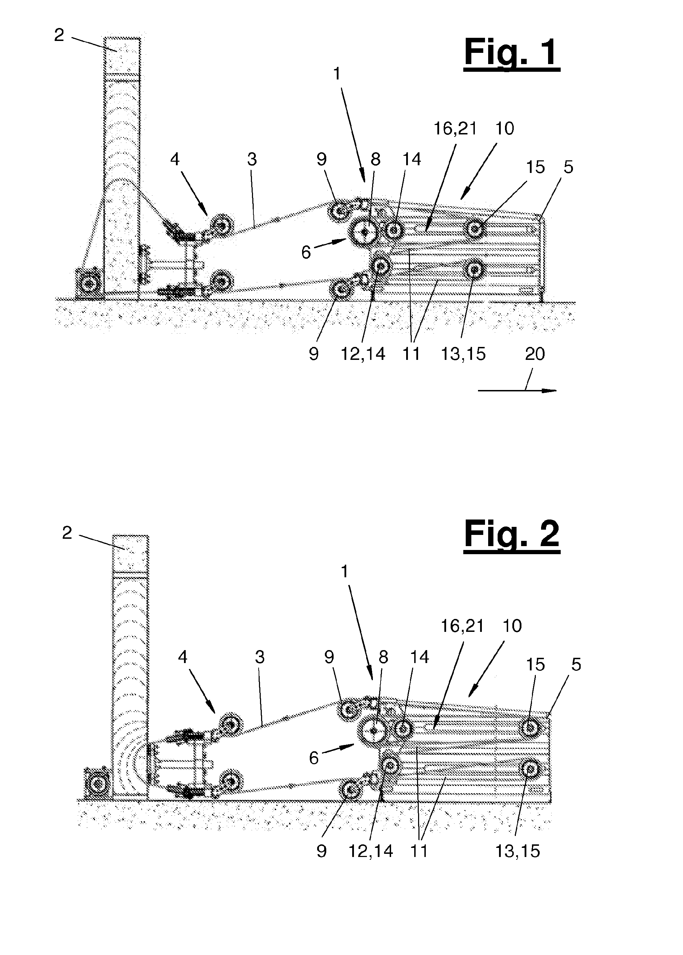

Die Erfindung betrifft eine Seilsäge (1). Sie betrifft ferner einen Vorschubantrieb (21) für eine solche Seilsäge, der eigenständige Bedeutung hat und auch in anderen Maschinen oder Geräten eingesetzt werden kann. Figur 1 und 2 zeigen eine Seilsäge (1) mit einem umlaufend angetriebenen Sägeseil (3) in verschiedenen Arbeitsstellungen an einer Wand (2), die mit dem Sägeseil (3) geschnitten wird. Entsprechend des Schneidfortschritts verlängert sich die freie Seillänge. Sie wird in einem veränderlichen Seilspeicher (10) der Seilsägemaschine (1) aufgenommen. Der Seilspeicher (10) wird hierbei mittels einer Stelleinrichtung (16) vergrößert. Mit dem Seilspeicher (10) und der Stelleinrichtung (16) wird außerdem das Sägeseil (3) unter Spannung gehalten.

Beim Sägeprozess wird das Sägeseil (3) über eine veränderliche Seilführung (4) von der Seilsäge (1) zur Wand (2) zurückgelenkt. Am Eingang der Seilsäge (1) sind Leitrollen (9) zum Einführen und Herausführen des Sägeseils (3) vorhanden. Die Seilsägemaschine (1) kann in der Grundkonzeption wie in der EP 1 135 231 B1 ausgebildet sein. Sie unterscheidet sich hiervon durch die Ausbildung der Stelleinrichtung (16).

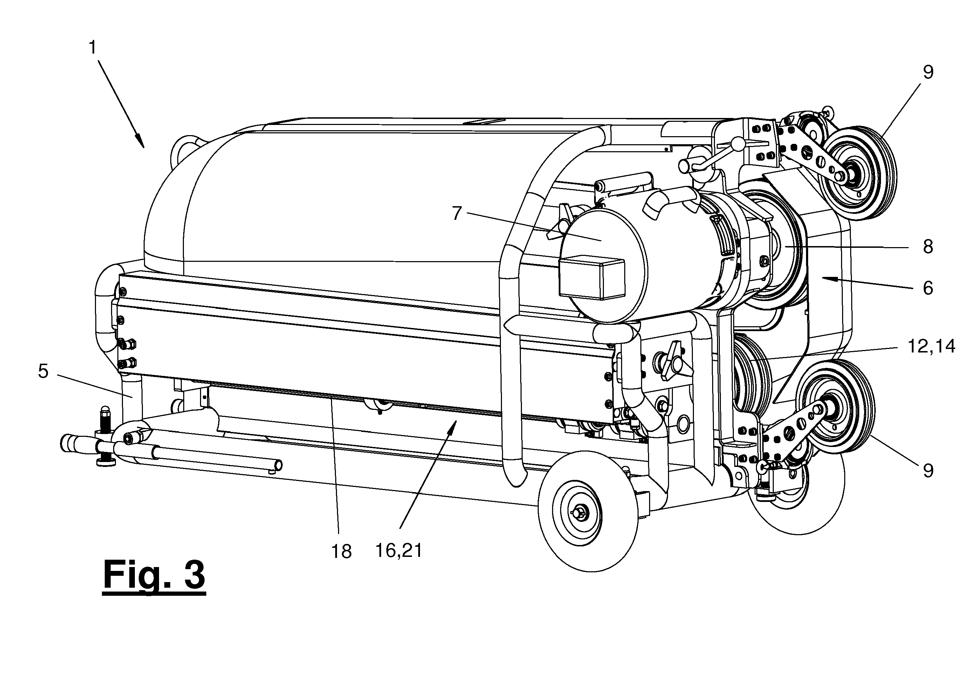

Die Seilsäge (1) weist ein Gestell (5) auf, an dem die Leitrollen (9) beweglich, insbesondere schwenkbar, frontseitig angeordnet sind. Das Gestell (5) kann von einem in Figur 3 gezeigten Gehäuse schützend umgeben sein. Im Gestell (5) kann auch der Antrieb (6) für die Umlaufbewegung des Sägeseils (3) angeordnet sein. Er besteht z.B. aus einem in Figur 1 und 2 nicht sichtbaren rückseitigen Motor (7), der eine Antriebsrolle (8) drehend antreibt, über die das Sägeseil in einer oder mehreren Umschlingungen geführt ist. Die Antriebsrolle (8) kann mehrere genutete Rollenabschnitte haben wie in der EP 1 135 231 B1, wobei ein Umlenkelement (14), z.B. eine frei drehbare Umlenkrolle, stationär zugeordnet ist, das für die Umlenkung des Sägeseils (3) zwischen den Rollenabschnitten sorgt.

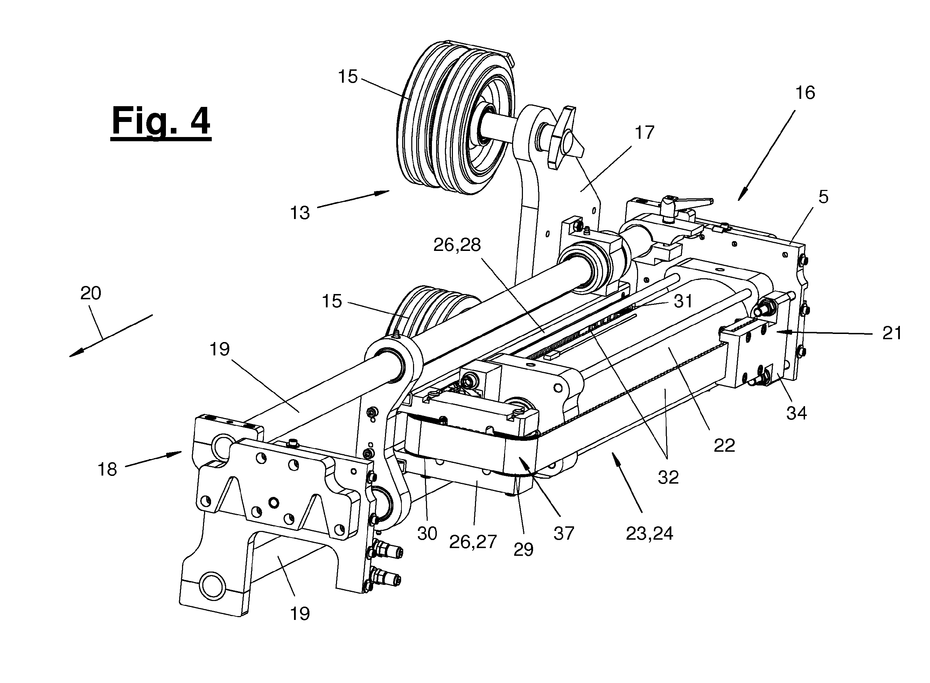

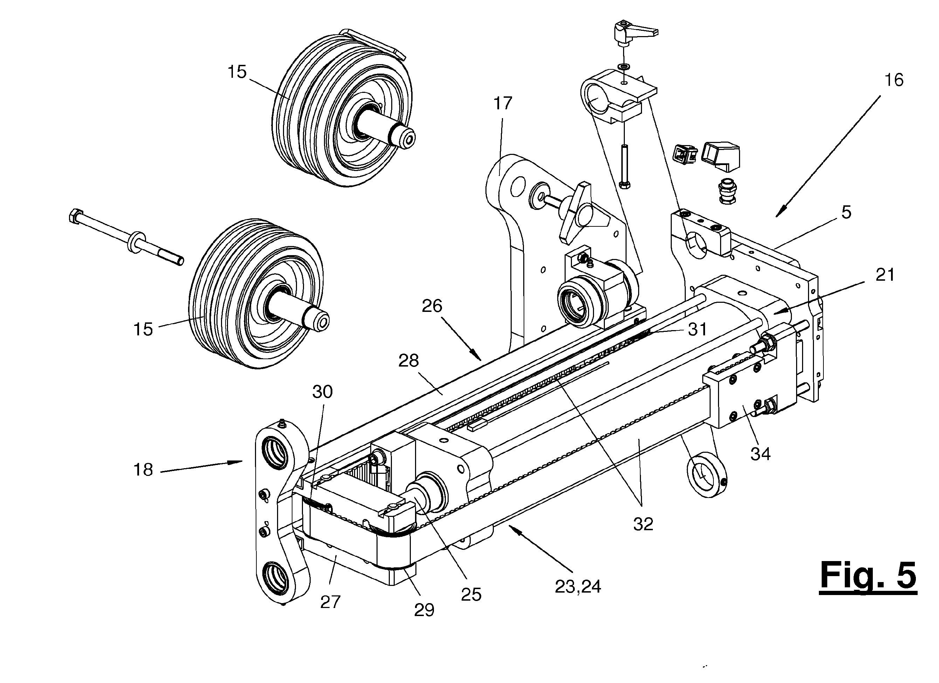

Der Seilspeicher (10) besteht aus einem stationären Speicherelement (12) und einem beweglichen Speicherelement (13). Die Speicherelemente (12,13) können auch mehrfach vorhanden sein. Dazwischen bewegt sich das Sägeseil (3) in mehreren Seilabschnitten (11). In der perspektivischen Rückansicht von Figur 3 ist vom Seilspeicher (10) vornehmlich das stationäre Speicherelement (12) zu sehen. Seine restlichen Teile sind in Figur 3 verborgen und in Figur 4 bis 9 detailliert dargestellt.

Für eine Veränderung, insbesondere Vergrößerung des Seilspeichers (10) ist die Stelleinrichtung (16) vorgesehen, die den Abstand zwischen einem stationären und einem beweglichen Speicherelement (12,13) erhöht und dadurch auch die Länge der im Seilspeicher (10) aufgenommenen Seilabschnitte (11) entsprechend vergrößert. Die Zahl der Seilabschnitte (11) im Seilspeicher (10) kann variieren, wobei ggf. auch das Sägeseil (3) während des Schneidprozesses in einer Ruhephase umgehängt wird.

Die Speicherelemente (12,13) sind relativ zueinander beweglich. In der gezeigten Ausführungsform ist das eine Speicherelement (12) stationär angeordnet und das andere Speicherelement (13) demgegenüber im Gestell (5) beweglich gelagert. Es kann hierbei eine beliebig geeignete Bewegung, beispielsweise die gezeigte Linearbewegung in Vorschubrichtung (20) zur Vergrößerung der Speicherkapazität ausführen. Alternativ können beide Speicherelemente (12,13) eine Bewegung ausführen.

Die Speicherelemente (12,13) können in beliebig geeigneter Weise konstruktiv ausgebildet sein. Im gezeigten Ausführungsbeispiel weisen sie z.B. jeweils ein oder mehrere Umlenkelemente (14,15), z.B. frei drehbar gelagerte Umlenkrollen, für das Sägeseil (3) auf. Die Umlenkelemente (14,15) sind in geeigneter Weise am Gestell (5) stationär oder beweglich gehalten.

Das stationäre Speicherelement (12) besitzt z.B. ein oder mehrere, insbesondere zwei gestellfeste Umlenkelemente (14), insbesondere Umlenkrollen, von denen eines der Antriebsrolle (8) zugeordnet ist und das andere sich darunter befindet. Das oder die Umlenkelement(e) (14) sind mit geeigneten Halterungen am Gestell (5) stationär montiert.

Das bewegliche Speicherelement (13) weist ebenfalls ein oder mehrere Umlenkelemente (15), hier z.B. zwei Umlenkrollen auf, die wahlweise einzeln oder wie im gezeigten Ausführungsbeispiel gemeinsam an einer gegenüber dem Gestell (5) beweglichen Halterung, z.B. an einem Schlitten (17), angeordnet sind und längs einer Führung (18) in Vorschubrichtung (20) beweglich gelagert sind. Die Umlenkrollen (14,15) sind als frei drehbare Rollen ausgebildet und ragen mit ihren Achsen durch Längsschlitze im Gestell (5). Sie können mehrere in Achsrichtung hintereinander angeordnete Rollenabschnitte aufweisen, mit denen die Zahl der Seilabschnitte (11) entsprechend vergrößert werden kann. Die Einzelheiten hierzu sind in der EP 1 135 231 B1 beschrieben.

Die Stelleinrichtung (16) dient zur Veränderung des Seilspeichers (10), insbesondere zu dessen Vergrößerung. In der gezeigten Ausführungsform kann sie auch zur Verkleinerung des Seilspeichers (10) herangezogen werden. Die Stelleinrichtung (16) weist einen Vorschubantrieb (21) auf, mit dem das bewegliche Speicherelement (13) relativ zum anderen Speicherelement (12) zumindest in Vorschubrichtung (20) vorwärts und ggf. auch in Gegenrichtung rückwärts bewegt werden kann. Die Stelleinrichtung (16) und ihr Vorschubantrieb (21) können steuer- oder regelbar sein.

Der Vorschubantrieb (21) weist ein lineares Antriebselement (22) auf, welches eine Ausfahrbewegung ausführt und mit dem beweglichen Speicherelement (13) über eine Übertragungseinrichtung (23) mit einer Übersetzung verbunden ist. Die Übersetzung beträgt z.B. 2:1. Sie kann auch anders, insbesondere kleiner oder größer als 2:1 sein. Hierdurch wird der Vorschubweg des beweglichen Speicherelements (13) gegenüber dem Vorschubweg des linearen Antriebselements (22) vergrößert.

Der Vorschubantrieb (21) dient im gezeigten Ausführungsbeispiel sowohl zum Vorschub, als auch zur Rückholung des beweglichen Speicherelements (13). In einer anderen vereinfachten Ausführungsform kann der Vorschubantrieb (21) nur zum Vorschub für die Speichervergrößerung dienen, wobei die Rückholung manuell nach Abschaltung oder Überbrückung des Vorschubantriebs (21) erfolgt. Die Rückholung kann alternativ durch einen Energiespeicher, z.B. ein internes oder externes Federelement erfolgen.

Das lineare Antriebselement (22) ist in geeigneter Weise, z.B. stationär, im Gestell (5) der Seilsäge (1) angeordnet und kann in geeigneter Weise konstruktiv ausgestaltet sein. Im gezeigten Ausführungsbeispiel ist das Antriebselement (22) als Zylinder, insbesondere als hydraulischer oder pneumatischer Zylinder, ausgebildet, der ein Zylindergehäuse und eine ausfahrbare Kolbenstange (25) besitzt. Das längenveränderliche Antriebselement (22) ist bevorzugt derart ausgebildet und angeordnet, dass es sich in allen Betriebsstellungen und Ausziehstellungen innerhalb des Gestells (5) befindet und nicht über dessen Umgrenzung nach außen ragt. Dies ist jedoch nicht zwingend, wobei ein Hinausragen über das Gestell (5) ebenfalls möglich ist.

Die Übertragungseinrichtung (23) zwischen dem beweglichen Speicherelement (3) und dem Antriebselement (22) kann ebenfalls in unterschiedlicher Weise ausgebildet sein. Im gezeigten Ausführungsbeispiel weist sie ein biegeelastisches Übertragungsmittel (32) auf, welches z.B. als Zahnriemen ausgebildet ist. Die Verzahnung kann einseitig sein. Alternativ kann das Übertragungsmittel (32) ein Seil oder ein anderer Riemen, insbesondere ein glatter flacher Riemen, ein Keilriemen oder dgl. sein.

Zur Bildung der Übersetzung weist die
Übertragungseinrichtung (23) ein Getriebe (24) auf, welches z.B. als Seilgetriebe oder Riemengetriebe ausgebildet ist und nach dem Flaschenzugprinzip funktionieren kann. Das Getriebe (24) weist eine oder mehrere frei drehbare Rollen (29,30,31) auf, über die das Übertragungsmittel (32) geführt ist. Unter den Rollen werden im Sinne der Erfindung auch Gleitführungen oder andere Umlenkmittel verstanden.

Das Getriebe (24) weist eine, zwei oder mehr Umlenkungen (37,38) von 180° oder mehr für das Übertragungsmittel (32) auf. Die Umlenkungen (37,38) sind im Bereich der besagten Rollen (29,30,31) angeordnet. Zwei oder mehr der Umlenkungen (37,38) sind gegenläufig ausgerichtet, was einerseits Übersetzungszwecken dienen kann und andererseits für einen Vorschub und eine Rückholung des beweglichen Speicherelements (13) vorgesehen sein kann.

Wie Figur 4 bis 9 verdeutlichen, ist im Gestell (5) eine Führung (18) für den Schlitten (17) und die Übertragungseinrichtung (23) vorhanden. Dies kann eine gezeigte gemeinsame Führung sein, wobei alternativ getrennte Führungsmittel möglich sind. Die Führung (18) kann in beliebig geeigneter Weise ausgebildet sein und ist z.B. als Linearführung in Vorschubrichtung (20) ausgeführt. Im gezeigten Ausführungsbeispiel besteht die Führung (18) aus zwei parallelen Führungsstangen (19), die übereinander angeordnet sind und an denen der Schlitten (17) und die Übertragungseinrichtung (23) mit Lagerbuchsen gleitend und kippfest geführt sind.

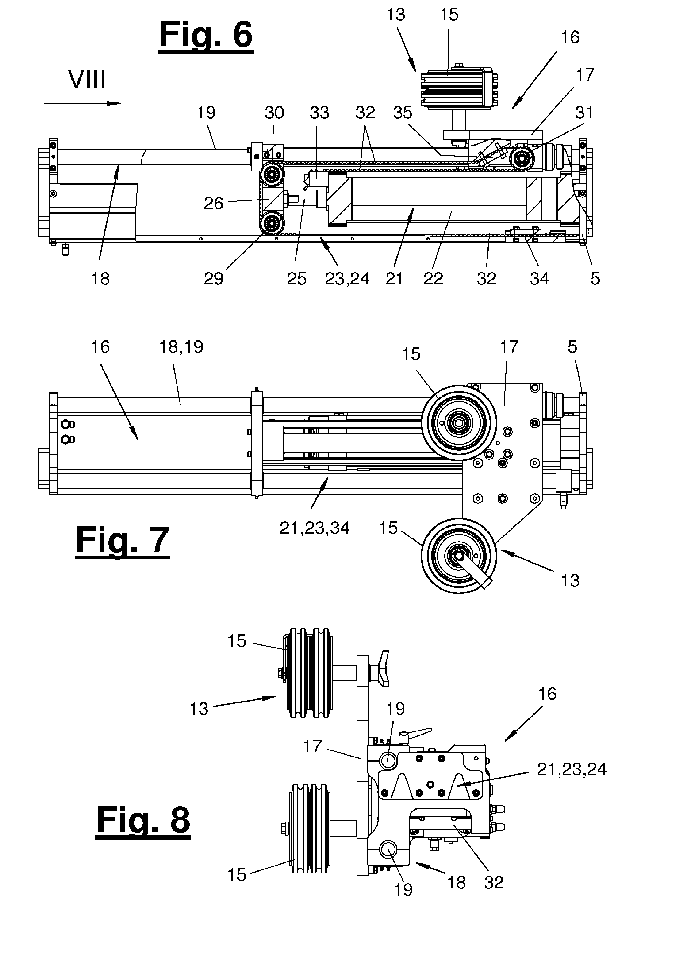

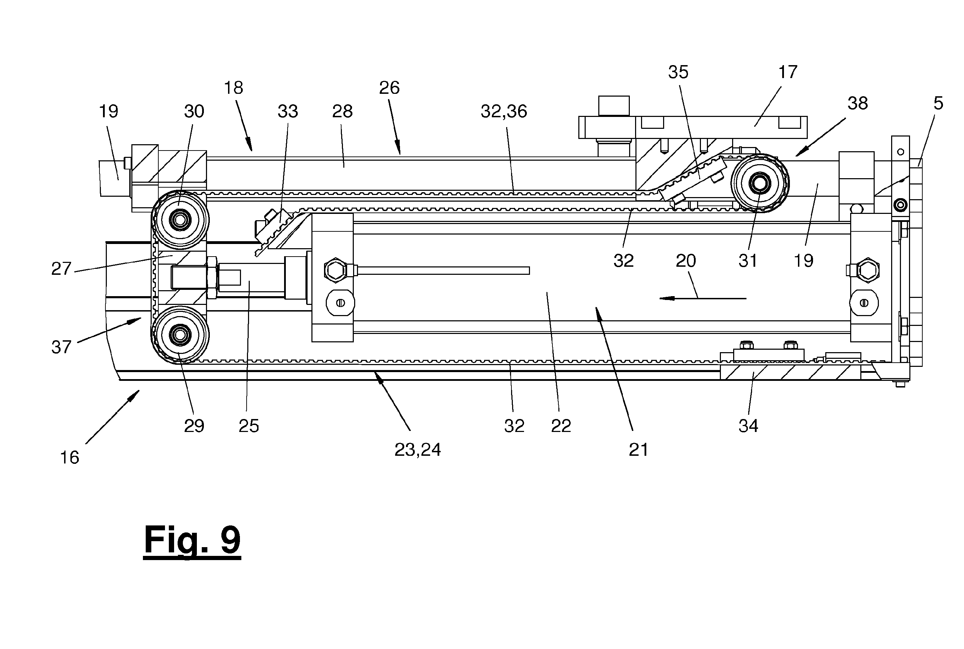

Wie insbesondere Figur 6 und 9 im Detail verdeutlichen, weist die Übertragungseinrichtung (23) einen Träger (26) mit den Lagerbuchsen auf, an dem mehrere Rollen (29,30,31) angeordnet sind. Der Träger (26) ist mit dem Antriebselement (22), insbesondere mit der Kolbenstange (25) des Zylinders, verbunden und wird hiervon in Vorschubrichtung (20) und ggf. zurück bewegt, wobei der Schlitten (17) entsprechend der Übersetzung in der gleichen Richtung und mit vergrößertem Hub bewegt wird.

Der Träger (26) hat z.B. eine abgewinkelte Form und besteht aus einem quer zur Vorschubrichtung (20) ausgerichteten vorderen kurzen Querbalken (27) und einem daran rechtwinklig abstehenden, längeren Längsbalken (28), der sich zwischen den Führungsstangen (19) befinden kann und der sich entgegen der Vorschubrichtung (20) nach hinten erstreckt. Der Querbalken (27) ist mit dem Antriebselement (22), insbesondere mit der Kolbenstange (25) verbunden. Die Länge des Längsbalkens (28) ist an die Übersetzung und den Mehrweg des Schlittens (17) bzw. Speicherelements (13) gegenüber dem Vorschubweg des Antriebs (21) angepasst.

An den Enden des Querträgers (27) sind zwei vordere Rollen (29,30) frei drehbar angeordnet, die eine erste 180°-Umlenkung (37) für das Übertragungsmittel (32) bilden. Am hinteren freien Ende des zum Zylinderboden weisenden Längsträgers (28) ist eine hintere Rolle (31) angeordnet, um die das Übertragungsmittel (32) mit einer zweiten gegenläufigen Umlenkung (38) geführt ist.

Das Übertragungsmittel (32), hier der Zahnriemen, hat eine endliche Länge und ist mit seinen beiden Endbereichen bzw. Enden stationär fixiert. Die eine stationäre Fixierung (34) ist im seitlichen oder rückwärtigen Bereich des Antriebselements (22), insbesondere des Zylindergehäuses, angeordnet und mit dem Gestell (5) verbunden. Das andere von der Rolle (31) kommende Riemenende ist am vorderen Bereich des Antriebselements (22), insbesondere des Zylindergehäuses, in der dortigen stationären Fixierung (33) aufgenommen. Die Verbindung zwischen dem Übertragungselement (32) und dem Schlitten (17) erfolgt mittels einer beweglichen Fixierung (35), die an einem internen Abschnitt (36) des Übertragungselements (32) angreift, der sich zwischen den Umlenkungen (37,38), insbesondere zwischen den Rollen (30,31), befindet.

Figur 6 und 9 zeigen den Vorschubantrieb (21) in der Ausgangsstellung mit eingefahrenem Antriebselement (22) und minimaler Speichergröße. Während des Sägebetriebs kann das Antriebselement (22) eingeschaltet werden und bewegt sich entsprechend des Schneidfortschritts in Vorschubrichtung (20), wobei das Sägeseil (3) unter der gewünschten Spannung gehalten wird. Das Antriebselement (22) kann eine beliebig einstellbare und insbesondere konstant gehaltene Antriebskraft entwickeln, wobei sich entsprechend des Schneidfortschritts der Ausfahrweg und das Speichervolumen vergrößern. Hierfür kann ein Zylinder, insbesondere ein Pneumatikzylinder, vorteilhaft sein.

Das in Figur 9 gezeigte Getriebe mit der Umlenkung (37) und den Fixierung (34,35) bewirkt bei einem Kolbenstangenvorschub eine doppelt so große gleich gerichtete Bewegung des Schlittens (17). Hierbei wird die Rolle (31) mit der Umlenkung (38) und der dort befindlichen Riemenabschnitte entsprechend des Kolbenstangenvorschubs mitgenommen. Der Träger (26) ist im Bereich des Querbalkens (27) mit den Lagerbuchsen der Führung (18) verbunden. Die Lagerbuchsen des Schlittens (17) sind mit Abstand dahinter angeordnet. In den Zeichnungen ist hiervon nur jeweils die obere Lagerbuchse zu sehen. Die Distanz wird über den vorgesehenen maximalen Vorschub aufgeholt.

Für die Rückholung kann das Antriebselement (22) umgesteuert werden. Bei der Rückwärtsbewegung spannt die hintere Rolle (31) das Übertragungselement (32) mit der Umlenkung (38) und zieht hierüber den Schlitten (17) mit der gleichen Übersetzung wie beim Vorschub zurück.

Wie Figur 9 verdeutlicht, sind die Riemenabschnitte zwischen der stationären Fixierung (34) und der Rolle (29) sowie der Rolle (31) und der anderen stationären Fixierung (33) im wesentlichen parallel zur Vorschubrichtung (20) und zur Führung (18) ausgerichtet und beidseits des Antriebselements (22) angeordnet. Die bewegliche Fixierung (35) am Schlitten (17) ist schräg angeordnet, wobei der interne Riemenabschnitt (36) von der Rolle (30) kommend zunächst ebenfalls parallel zur Vorschubrichtung (20) ausgerichtet und außenliegend angeordnet ist, wobei über die schräge Fixierung (35) der Riemenabschnitt (36) zur hinteren Rolle (31) hingelenkt wird und dann die 180°― Umlenkung (38) bildet. Die Rollen (29,30,31) können eine Außenverzahnung aufweisen, die mit den Riemenzähnen kämmt. Sie können alternativ eben zylindrischen glatten oder ggf. genuteten Rollenmantel aufweisen.

Abwandlungen der gezeigten und beschriebenen Ausführungsform sind in verschiedener Weise möglich. Die Übersetzung kann z.B. durch weitere Umlenkungen vergrößert werden. Ferner können die beiden parallelen und kleineren Rollen (29,30) am Querbalken (27) durch eine einzelne größere Rolle ersetzt werden. Auf die hintere Rolle (31), den Längsbalken (28) und die zweite stationäre Fixierung (33) kann für eine Vereinfachung und einen einseitigen Vorschub verzichtet werden. Die konstruktive Gestaltung der Maschinen- und Antriebsteile kann auch in anderer Hinsicht variieren. Das lineare Antriebselement (22) kann z.B. als ggf. abgedichteter Spindeltrieb, Zahnstangentrieb oder dgl. ausgebildet sein. Auch die Führung (18) kann variieren. Sie muss nicht linear sein, sondern kann eine oder mehrere, ggf. stellenweise, Krümmungen mit ggf. entsprechen Freiheitsgraden der Fixierung (45) aufweisen. Der Vorschubantrieb (21) mit dem linearen Antriebselement (22) und der Übertragungseinrichtung (23) sowie dem Übertragungsmittel (32), insbesondere in Seil- oder Riemenform, kann auch für andere Zwecke und Maschinen, z.B. für Trenn- und Schneidmaschinen oder andere Maschinen, eingesetzt werden. Er bewegt dabei statt des Speicherelements ein Maschinenteil (13), das z.B. ein rotierend angetriebenes Trennwerkzeug, insbesondere eine Bohrkrone, eine Trennscheibe oder dgl., aufweisen kann. Das Maschinenteil (13) kann dabei einen Schlitten mit einem Drehantrieb besitzen. Die Bewegung kann wie im gezeigten Ausführungsbeispiel linear geführt sein.

### BEZUGSZEICHENLISTE

- 1: Seilsäge
- 2: Wand
- 3: Sägeseil
- 4: Seilführung
- 5: Gestell
- 6: Antrieb
- 7: Motor
- 8: Antriebsrolle
- 9: Leitrolle
- 10: Seilspeicher
- 11: Seilabschnitt
- 12: Speicherelement stationär
- 13: Speicherelement beweglich, Maschinenteil
- 14: Umlenkelement, Umlenkrolle stationär
- 15: Umlenkelement, Umlenkrolle beweglich
- 16: Stelleinrichtung
- 17: Schlitten
- 18: Führung
- 19: Führungsstange
- 20: Vorschubrichtung
- 21: Vorschubantrieb
- 22: lineares Antriebselement, Zylinder
- 23: Übertragungseinrichtung
- 24: Getriebe, Riementrieb, Seiltrieb
- 25: Kolbenstange
- 26: Träger
- 27: Querbalken
- 28: Längsbalken
- 29: Rolle vorn
- 30: Rolle vorn
- 31: Rolle hinten
- 32: Übertragungsmittel, Riemen, Seil
- 33: Fixierung stationär
- 34: Fixierung stationär
- 35: Fixierung beweglich
- 36: interner Abschnitt, Riemenabschnitt
- 37: Umlenkung
- 38: Umlenkung

## Patentansprüche

1. Seilsäge, mit einem veränderlichen Seilspeicher (10) für ein Sägeseil (3), wobei der Seilspeicher (10) relativ zueinander bewegliche Speicherelemente (12,13) und eine Stelleinrichtung (16) mit einem Vorschubantrieb (21) für die Verstellung der Speicherelemente (12,13) aufweist, **dadurch gekennzeichnet, dass** der Vorschubantrieb (21) ein lineares Antriebselement (22) aufweist, das mit dem beweglichen Speicherelement (13) über eine Übertragungseinrichtung (23) mit einer Übersetzung verbunden ist.

2. Seilsäge nach Anspruch 1, **dadurch**
**gekennzeichnet, dass** der Vorschubantrieb (21) zum Vorschub und zur Rückholung eines beweglichen **Speicherelements** (13) ausgebildet ist.

3. Seilsäge nach Anspruch 1 oder 2, **dadurch gekennzeichnet, dass** das bevorzugt als Zylinder ausgebildete Antriebselement (22) stationär in einem Gestell (5) der Seilsäge (1) angeordnet ist und sich bevorzugt in allen Ausziehstellungen innerhalb des Gestells (5) befindet.

4. Seilsäge nach Anspruch 1, 2 oder 3, **dadurch gekennzeichnet, dass** die Übertragungseinrichtung (23) ein biegeelastisches Übertragungsmittel (32), insbesondere ein Seil oder einen Riemen, bevorzugt einen Zahnriemen, und ein Getriebe (24), insbesondere ein Seil- oder Riemengetriebe, aufweist.

5. Seilsäge nach einem der vorhergehenden Ansprüche, **dadurch gekennzeichnet, dass** ein Getriebe (24) der Übertragungseinrichtung (23) eine, zwei oder mehr Umlenkungen (37,38) von 180° oder mehr eines biegeelastischen Übertragungsmittels (32) um Rollen (29,30,31) aufweist, wobei bevorzugt zwei oder mehr Umlenkungen (37,38) des Übertragungsmittels (32) gegenläufig ausgerichtet sind.

6. Seilsäge nach einem der vorhergehenden Ansprüche, **dadurch gekennzeichnet, dass** mindestens zwei Rollen (29,30,31) in Vorschubrichtung (20) distanziert und an einem gemeinsamen Träger (26) angeordnet sind.

7. Seilsäge nach einem der vorhergehenden Ansprüche, **dadurch gekennzeichnet, dass** das Übertragungsmittel (32) an seinen Enden relativ ortsfeste Fixierungen (33,34) aufweist und über eine Fixierung (35) mit dem beweglichen Speicherelement (13) verbunden ist.

8. Seilsäge nach einem der vorhergehenden Ansprüche, **dadurch gekennzeichnet, dass** ein Speicherelement (12,13) ein Umlenkelement (15), insbesondere eine Umlenkrolle, für das Sägeseil (3) aufweist.

9. Seilsäge nach einem der vorhergehenden Ansprüche, **dadurch gekennzeichnet, dass** ein bewegliches Speicherelement (13) linear in Vorschubrichtung (20) geführt ist.

10. Seilsäge nach einem der vorhergehenden Ansprüche, **dadurch gekennzeichnet, dass** ein bewegliches Speicherelement (13) einen Schlitten (17) mit einer, zwei oder mehr Umlenkelementen (15), insbesondere Umlenkrollen (15) aufweist, wobei der Schlitten (17) und der Träger (26) gemeinsam im Gestell (5) linear geführt sind.

11. Seilsäge nach einem der vorhergehenden Ansprüche, **dadurch gekennzeichnet, dass** der Träger (26) eine abgewinkelte Form aufweist und mit dem Antriebselement (22), insbesondere einer Kolbenstange (25) eines Zylinders, verbunden ist.

12. Seilsäge nach einem der vorhergehenden Ansprüche, **dadurch gekennzeichnet, dass** die Seilsäge (1) einen Antrieb (6) für die Umlaufbewegung des Sägeseils (3)aufweist.

13. Vorschubantrieb, insbesondere nach einem der Ansprüche 1 bis 12, für Maschinen, insbesondere Trenn- oder Schneidmaschinen, zum geführten Bewegen eines Maschinenteils (13) in einer Vorschubrichtung (20), **dadurch gekennzeichnet, dass** der Vorschubantrieb (21) ein lineares Antriebselement (22) aufweist, das mit dem Maschinenteil (13) über eine Übertragungseinrichtung (23) mit einer Übersetzung verbunden ist.

14. Vorschubantrieb nach Anspruch 13, **dadurch gekennzeichnet, dass** das lineare Antriebselement (22) als Zylinder ausgebildet ist und die Übertragungseinrichtung (23) ein Seil- oder Riemengetriebe (24) mit einer, zwei oder mehr Umlenkungen (37,38) von 180° oder mehr eines Seils oder Riemens (32) sowie einen geführten und ggf. abgewinkelten Träger (26) mit mehreren Rollen (29,30,31) für das Seil oder den Riemen (32) aufweist.

15. Vorschubantrieb nach Anspruch 13 oder 14, **dadurch gekennzeichnet, dass** das Maschinenteil (13) ein rotierend angetriebenes Trennwerkzeug, insbesondere eine Bohrkrone, eine Trennscheibe oder dgl. aufweist.
